# DEMANDE DE BREVET EUROPEEN

(11) **EP 0 692 707 A1**
(43) Date de publication de la demande: **17.01.1996**
(21) Numéro de dépôt: 95401617.6
(22) Date de dépôt: 05.07.1995
(51) Int. Cl.: G01M 11/02

(54) **Procédé de caractérisation d'un instrument optique par autocollimation**

(30) Priorité: 12.07.1994 FR 9408650
(71) Demandeur: AEROSPATIALE Société Nationale Industrielle, F-75781 Paris Cédex 16 (FR)
(72) Inventeur: Leblanc, Jean-Marc, F-06530 Peymeinade (FR)
(74) Mandataire: Rinuy, Santarelli

(57) **Abrégé**

Un procédé pour la caractérisation optique d'un instrument optique comporte un système optique ayant un plan focal (F), comprenant une pupille d'entrée, un champ de vue centré sur un axe optique (V-V), et un ensemble de détection (13) occupant une position prédéterminée fixe dans le plan focal, en sorte de recevoir l'image de faisceaux rentrant dans la pupille d'entrée selon une direction de visée prédéterminée (Z-Z), selon lequel on envoie vers la pupille d'entrée l'image à l'infini d'un objet-test (15) et on recueille des signaux de mesure générés par le système de détection, caractérisé en ce qu'on génère l'objet test à l'intérieur de l'instrument optique, dans le plan focal du système optique et en direction du système optique, et on dispose sur le trajet des rayons lumineux parallèles qui sortent de la pupille d'entrée un miroir plan (20) orienté en sorte de renvoyer ces rayons lumineux parallèles vers cette pupille d'entrée selon la direction de visée prédéterminée (Z-Z).

## Description

L'invention concerne la caractérisation d'un instrument optique (éléments optiques et ensemble de détection) notamment par détermination de sa fonction de transfert de modulation (FTM) ou de sa fonction de transfert de contraste (FTC).

Elle vise plus précisément à permettre une telle caractérisation sans collimateur.

Ainsi qu'on le sait, la FTM est la performance unanimement reconnue et classiquement utilisée notamment dans les spécifications des clients, pour caractériser la qualité d'un instrument d'optique dont l'exigence principale est une résolution spatiale optimale, par exemple un télescope embarqué sur un satellite d'observation terrestre.

La FTM mesure la dégradation de la modulation de contraste de l'image d'une mire objet en fonction de la fréquence spatiale de modulation de cette mire objetet de son orientation. C'est en fait une mesure de l'amplitude des fluctuations de signal détecté (rapportée à l'amplitude maximale correspondante à un contraste de zéro à un) en fonction de la fréquence spatiale d'une alternance de zones claires et foncées qui passe devant l'instrument. La théorie s'applique à des mires sinusoïdales mais dans la pratique on utilise diverses méthodes telles que déplacement de mires créneaux, déplacement de fente, déplacement de bord de plage, etc.

On appelle FTC la dégragation de contraste mesurée pour une micre créneau, à une fréquence donnée.

Les instruments d'optique embarqués sur satellite prennent des images de la terre à une distance de plusieurs centaines de kilomètres, ce qui est assimilable à une visée à l'infini.

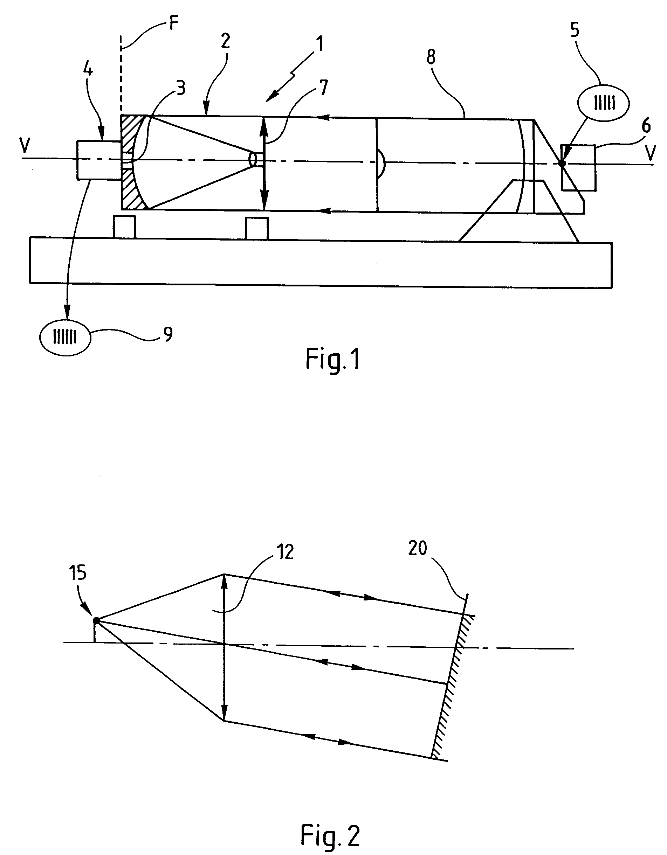

Les mesures de FTM habituelles pour ce genre d'instrument utilisent un collimateur qui a pour fonction d'envoyer l'image de l'objet test (par exemple une mire créneau) à l'infini. Voir la configuration d'essai, figure 1.

La mesure de FTM effectuée caractérise alors la dégradation de toute la chaîne de mesure partant de l'objet test jusqu'à l'image obtenue par l'instrument. La FTM monochromatique de l'ensemble est le produit des FTM de chacun des composants, y compris le collimateur : collimateur, optique de l'instrument, détecteurs, électronique ... On voit donc qu'idéalement, pour une caractérisation indépendante des performances des éléments spécifiques de la chaîne de mesure, la contribution de la chaîne de mesure à la performance de FTM obtenue devrait être d'un second ordre par rapport à la performance de l'instrument, c'est-à-dire en particulier que le collimateur devrait avoir une qualité bien meilleure que l'instrument. Sachant que les instruments optiques sont parfois conçus et réalisés au mieux des technologies disponibles, on comprend qu'il n'est pas possible que le collimateur soit suffisamment meilleur que l'instrument pour que sa contribution à la dégradation de FTM soit négligeable. On arrive parfois à le faire un peu mieux que l'instrument, à caractériser sa FTM de façon indépendante puis à la "retirer" de la mesure d'ensemble.

Ceci nécessite de développer des collimateurs de très grande qualité. En outre, la précision et la qualité mécanique des éléments mobiles de support de ce collimateur doivent être compatibles avec les exigences optiques, le collimateur devant être orienté et déplacé devant l'instrument pour balayer son champ de vue tout en conservant les performances optiques. La complexité et les difficultés de réalisation, et donc le coût du collimateur, vont grandissant avec la taille de l'instrument.

L'encombrement du collimateur est également un paramètre fondamental dans la mesure où l'on désire faire des mesures de FTM sous vide, axe optique horizontal, de sorte que la longueur de ce collimateur dimensionne la taille de la chambre à vide.

Au delà de la classe d'instrument de 1 m de diamètre, le coût et l'encombrement d'un collimateur deviennent souvent rédhibitoires.

Il est donc intéressant de pouvoir se passer de collimateur, d'autant qu'il existe un souhait dans la démarche générale de caractérisation d'un quelconque produit de minimiser toute perturbation extérieure sur ces résultats de mesure et/ou d'augmenter la précision des méthodes de mesure utilisées.

L'invention a ainsi pour objet d'effectuer une caractérisation précise (au moins aussi précise que les solutions connues) d'un instrument optique sans avoir à utiliser de collimateur, et en ne faisant intervenir, en dehors de l'instrument optique à caractériser, que des éléments peu nombreux, simples et peu volumineux.

L'invention propose à cet effet un procédé pour la caractérisation optique d'un instrument optique comprenant un système optique ayant un plan focal et comprenant une pupille d'entrée, un champ de vue centré sur un axe optique, et un ensemble de détection occupant une position prédéterminée fixe dans le plan focal, en sorte de recevoir l'image de faisceaux rentrant dans la pupille d'entrée selon une direction de visée prédéterminée, selon lequel on envoie vers la pupille d'entrée l'image à l'infini d'un objet-test et on recueille des signaux de mesure générés par le système de détection, caractérisé en ce qu'on génère l'objet test à l'intérieur de l'instrument optique, dans le plan focal du système optique et en direction du système optique, et on dispose sur le trajet des rayons lumineux parallèles qui sortent de la pupille d'entrée un miroir plan orienté en sorte de renvoyer ces rayons lumineux parallèles vers cette pupille d'entrée selon la direction de visée prédéterminée.

De cette façon, on se sert du système optique de l'instrument lui-même pour collimater le faisceau optique test en lieu et place du collimateur.

Selon des enseignements préférés de l'invention :
- on dispose un autre objet source dans le plan focal et on dispose sur le trajet du faisceau lumineux sortant ledit miroir en sorte de renvoyer ce faisceau vers un détecteur de front d'onde,
- l'objet-test est localisé réellement dans le plan focal, en étant éclairé par une fibre optique solidaire de l'ensemble de détection et recevant de l'énergie lumineuse émise par une source de lumière extérieure à l'instrument,
- l'objet est localisé réellement à l'extérieur de l'instrument et des fibres optiques sont intégrées à l'ensemble de détection en sorte de former un objet-test virtuel dans le plan focal.

L'invention propose également, pour la mise en oeuvre de ce.procédé, un instrument optique adapté à la mise en oeuvre du procédé comprenant un système optique ayant un plan focal et comprenant une pupille d'entrée ayant un champ de vue centré sur un axe optique, et un ensemble de détection occupant une position prédéterminée fixe dans le plan focal, caractérisé en ce qu'il comporte en outre, dans le plan focal, un objet-test.

Selon des caractéristiques préférées et éventuellement combinées :
- l'objet-test est localisé réellement dans le plan focal, en étant éclairé par une fibre optique solidaire de l'ensemble de détection et recevant de l'énergie lumineuse émise par une source de lumière extérieure à l'instrument,
- l'objet est localisé réellement à l'extérieur de l'instrument et des fibres optiques sont intégrées à l'ensemble de détection en sorte de former un objet-test virtuel dans le plan focal,
- un détecteur de front d'onde est en outre disposé dans le plan focal.

L'invention consiste ainsi à intégrer dans l'instrument lui-même et précisément dans le plan focal ou aux alentours de celui-ci, l'objet test et de l'imager par autocollimation devant un miroir plan faisant ou non partie de l'instrument sur un ou plusieurs détecteurs de l'ensemble de détection (appelé en pratique boîtier de détection). L'instrument possède alors une capacité d'auto-test moyennant sa mise en autocollimation. Il est ainsi envisageable, dans certaines applications, de procéder à une caractérisation de contrôle au cours de simples opérations d'interruption en service. Aucun collimateur n'est nécessaire. Le miroir plan doit en pratique avoir la taille de l'instrument et être de grande qualité puisqu'il contribue à la FTM mesurée, mais il est plus facile à réaliser, plus facile à orienter et beaucoup moins encombrant qu'un collimateur ayant les qualités requises.

En contre partie, il faut ménager l'objet test dans l'instrument. Ceci est tout à fait possible si cela est prévu dès le départ de la conception de l'ensemble de détection. Les détecteurs sont la plupart du temps installés en barrette et n'occupent pas tout le champ, ce qui laisse de la place disponible.

La taille de l'objet test est couramment de l'ordre de celle de quelques détecteurs, une dizaine par exemple, ce qui fait environ 100 µm.

L'objet test peut être de tout type connu et utilisé classiquement pour les mesures de FTM, par exemple une mire créneau.

Généralement la mesure s'obtient par un mouvement de l'objet test devant le ou les détecteurs. Ce mouvement peut s'imaginer par exemple sur la mire elle-même, soit par mécanisme intégré, soit par une mire à cristaux liquides ou encore par un balayage en orientation du miroir plan.

L'objet test doit être éclairé. Cette fonction est réalisée habituellement par un système bloc source situé dans le plan focal du collimateur.

Pour des raisons d'encombrement, il n'est pas envisageable de mettre une lampe dans le boîtier de détection, mais grâce à une fibre optique, peu encombrante et facilement aménageable dans le boîtier de détection, on peut aisément amener un faisceau lumineux sur l'objet test pour l'éclairer. La lampe, située à l'extérieur du boîtier de détection, est un moyen sol de test qui ne fait pas partie de l'instrument. Par contre, l'objet test et la fibre optique peuvent eux faire partie intégrante de l'instrument.

Des objets, caractéristiques et avantages de l'invention ressortent de la description qui suit, donnée à titre d'exemple non limitatif, en regard des dessins annexés sur lesquels :
- la figure 1 est la configuration de principe d'une caractérisation d'un instrument optique par un procédé classique,
- la figure 2 est un schéma de principe du procédé de l'invention,
- la figure 3 est un second schéma de principe du procédé de l'invention, et
- la figure 4 est la configuration de principe d'une caractérisation d'un instrument optique conforme à l'invention.

L'installation de la figure 1 comporte un instrument classique 1, comportant un système optique 2, par exemple un télescope, ayant un plan focal F dans lequel est positionné un ensemble de détection 3 monté sur une face avant d'un boîtier de détection 4.

Un objet-test 5 monté sur la face avant d'un bloc source 6 est disposé à l'extérieur de l'instrument, sur l'axe de visée V-V de la pupille d'entrée 7 du système optique, au foyer d'un collimateur 8. Il se forme une image 9.

La méthode proposée par l'invention utilise le système optique lui-même, schématisé aux figures 2 à 4 par une simple lentille, 12, d'axe optique X-X, qui figure également la pupille d'entrée de l'instrument, pour générer l'image de l'objet test à l'infini. L'objet test est situé dans le plan focal du sous-ensemble optique. Les rayons lumineux issus de cet objet ressortent collimatés du télescope. Ils se réfléchissent alors sur un miroir plan d'autocollimation (MPA) repéré 20, de la taille de la pupille d'entrée de l'instrument et repassent dans le télescope pour se recombiner en formant l'image de l'objet test dans le plan focal du télescope.

Le principe est illustré par la figure 2 où le miroir d'autocollimation 20 est orienté perpendiculairement aux rayons lumineux. Objet et image sont alors superposés.

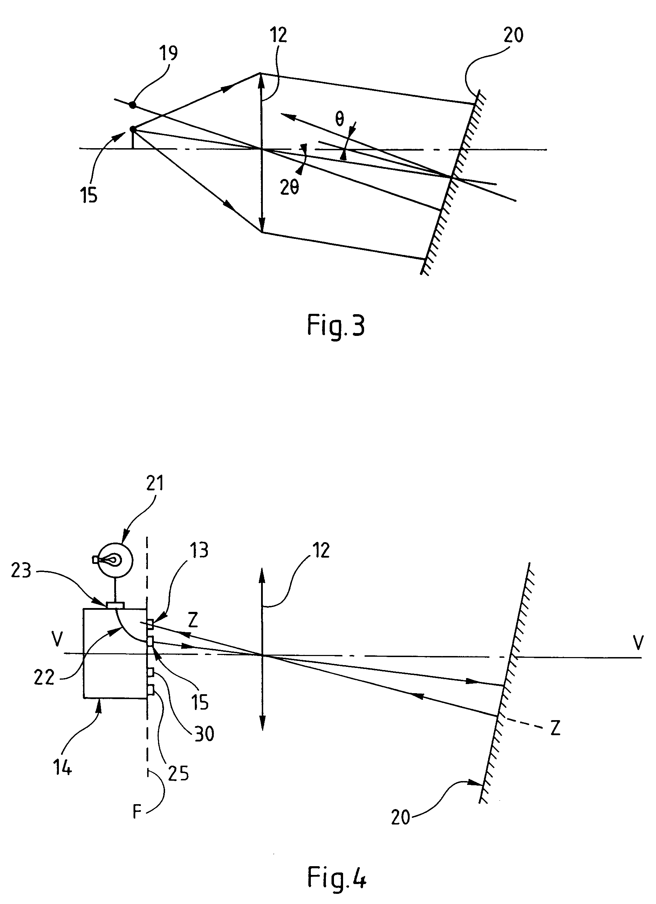

Pour réaliser la mesure, il est en effet nécessaire qu'objet 15 et image 19 soient décalés de manière à imager l'objet test sur un détecteur ou plusieurs détecteurs de l'instrument. Ceci est illustré par la figure 3. Si le miroir 20 est incliné de θ, objet et image sont séparés de 2θ.

A la figure 4, l'objet 15 est porté par la face avant du boîtier de détection 14, dans le plan focal F à distance des détecteurs 13 proprement dits. Cet objet est éclairé par l'arrière par de la lumière générée par une lampe 21 et amenée par une fibre optique 22 solidaire de l'instrument et munie d'un connecteur d'entrée 23. Le miroir 20 est orienté en sorte de renvoyer les rayons selon la direction d'entrée Z-Z associée aux détecteurs.

En variante non représentée, la fibre optique est remplacée par un faisceau de très petites fibres s'étendant depuis un objet réel disposé près de la lampe jusqu'au plan focal où les fibres transportent l'image de l'objet réel en formant un objet virtuel.

Ainsi cette variante consiste à ne pas mettre l'objet test dans le boîtier de détection mais à le considérer comme un moyen d'essai sol situé à l'extérieur de l'instrument.

Un système de transport d'image, utilisant des fibres optiques pour des raisons de commodités d'aménagement, permettrait de l'imager dans le plan focal du télescope. Ce serait alors un objet-test virtuel, toutes choses restant égales par ailleurs.

Dans ce cas, il serait plus aisé de changer d'objet-test, par contre le transport d'image apporte une dégradation de FTM qu'il convient de maîtriser. Par ailleurs, la taille des fibres élémentaires doit être petite devant la taille du détecteur par exemple dix fois plus petite, c'est-à-dire 1 µm. Les fibres actuelles pour transport d'image ont un diamètre de 10 µm. Un système à lentille est dans ce cas nécessaire pour amener la résolution de la mire image à 1 µm.

Dans le cas d'un instrument à contrôle actif utilisant un détecteur de front d'onde 30, la méthode décrite permet également de tester le fonctionnement de la boucle de contrôle actif, par exemple en préliminaire de la mesure de FTM. Pour ce faire, il s'agit d'envoyer sur le détecteur de front d'onde un front d'onde connu le plus plan possible. Ce dernier peut être généré sans collimateur par un objet source 25 situé dans le boîtier de détection au voisinage du plan focal et s'imageant via le MPA sur le senseur de front d'onde en utilisant la même configuration que pour les mesures de FTM précédemment décrites.

En pratique, un objet test permet de mesurer la FTM en une zone du champ de l'instrument assez réduite, constituée par des détecteurs proches de l'objet test (l'angle de déviation du MPA, θ à la figure 3, doit rester petit). Il faudra pratiquement aménager autant d'objets tests que de zones du champ de l'instrument à caractériser en FTM. Ce nombre est typiquement une dizaine maximum, ce qui reste raisonnable.

Il va de soi que la description qui précède n'a été proposée qu'à titre d'exemple non limitatif et que de nombreuses variantes peuvent être proposées par l'homme de l'art sans sortir du cadre de l'invention.

## Revendications

1. Procédé pour la caractérisation optique d'un instrument optique comprenant un système optique ayant un plan focal (F), une pupille d'entrée, un champ de vue centré sur un axe optique (V-V), et un ensemble de détection (13) occupant une position prédéterminée fixe dans le plan focal, en sorte de recevoir l'image de faisceaux rentrant dans la pupille d'entrée selon une direction de visée prédéterminée (Z-Z), selon lequel on envoie vers la pupille d'entrée l'image à l'infini d'un objet-test (15) et on recueille des signaux de mesure générés par le système de détection, caractérisé en ce qu'on génère l'objet test à l'intérieur de l'instrument optique, dans le plan focal du système optique et en direction du système optique, et on dispose sur le trajet des rayons lumineux parallèles qui sortent de la pupille d'entrée un miroir plan (20) orienté en sorte de renvoyer ces rayons lumineux parallèles vers cette pupille d'entrée selon la direction de visée prédéterminée (Z-Z).

2. Procédé selon la revendication 1, caractérisé en ce qu'on dispose un autre objet source (25) dans le plan focal et on dispose sur le trajet du faisceau lumineux sortant ledit miroir en sorte de renvoyer ce faisceau vers un détecteur de front d'onde (30).

3. Procédé selon la revendication 1 ou la revendication 2, caractérisé en ce que l'objet-test (15) est localisé réellement dans le plan focal, en étant éclairé par une fibre optique (22) solidaire de l'ensemble de détection et recevant de l'énergie lumineuse émise par une source de lumière (21) extérieure à l'instrument.

4. Procédé selon la revendication 1 ou la revendication 2, caractérisé en ce que l'objet est localisé réellement à l'extérieur de l'instrument et des fibres optiques sont intégrées à l'ensemble de détection en sorte de former un objet-test virtuel dans le plan focal.

5. Instrument optique adapté à la mise en oeuvre du procédé comprenant un système optique ayant un plan focal (F) et comprenant une pupille d'entrée (12), un champ de vue centré sur un axe optique (V-V) et un ensemble de détection (13) occupant une position prédéterminée fixe dans le plan focal, caractérisé en ce qu'il comporte en outre, dans le plan focal, un objet-test.

6. Instrument optique selon la revendication 5, caractérisé en ce que l'objet-test (15) est localisé réellement dans le plan focal, en étant éclairé par une fibre optique (22) solidaire de l'ensemble de détection et recevant de l'énergie lumineuse émise par une source de lumière (21) extérieure à l'instrument.

7. Instrument optique selon la revendication 5, caractérisé en ce que l'objet est localisé réellement à l'extérieur de l'instrument et des fibres optiques sont intégrées à l'ensemble de détection en sorte de former un objet-test virtuel dans le plan focal.

8. Instrument optique selon l'une quelconque des revendications 5 à 7, caractérisé en ce qu'un détecteur de front d'onde (30) est en outre disposé dans le plan focal.
